# FASCICULE DE BREVET EUROPEEN

(11) **EP 4 630 610 B1**
(45) Date de publication et mention de la délivrance du brevet: **25.11.2026**
(21) Numéro de dépôt: 23834265.3
(22) Date de dépôt: 04.12.2023
(51) Int. Cl.: D03D 1/00, D03D 25/00, B29B 11/16, B29C 70/24, F01D 5/14, F01D 5/28, B29D 99/00

(54) **PREFORME D'AUBE EN UNE SEULE PIECE INTEGRANT DES PORTIONS DE TISSU UNIDIRECTIONNEL RECOUVRANTES**
EINTEILIGE KLINGENVORFORM MIT ÜBERLAPPENDEN UNIDIREKTIONALEN GEWEBEABSCHNITTEN
ONE-PIECE BLADE PREFORM INCORPORATING OVERLAPPING UNIDIRECTIONAL FABRIC PORTIONS

(30) Priorité: 09.12.2022 FR 2213052
(43) Date de publication de la demande: 15.10.2025
(73) Titulaire: Safran Ceramics, 33185 Le Haillan (FR)
(72) Inventeur: ROUSSILLE, Clément, Marie, Benoît, 77550 MOISSY-CRAMAYEL (FR); LEFEBVRE, Marie, 77550 MOISSY-CRAMAYEL (FR); MATEO, Julien, André, Roger, 77550 MOISSY-CRAMAYEL (FR); BLACHIER, Jérémy, Paul, André, 77550 MOISSY-CRAMAYEL (FR); PLANCKEEL, Aline, 77550 MOISSY-CRAMAYEL (FR)
(74) Mandataire: Cabinet Beau de Loménie
(86) Numéro de dépôt international: PCT/FR2023/051920
(87) Numéro de publication internationale: WO 2024/121498

(56) Documents cités:
- WO-A1-2022/129733
- WO-A2-2013/034857
- US-A1- 2017 198 591

## Description

### Domaine Technique

La présente invention se rapporte au domaine des aubes en matériau composite comportant un renfort fibreux densifié par une matrice. Le domaine visé est celui d'aubes de turbines à gaz pour moteurs aéronautiques ou turbines industrielles.

### Technique antérieure

La réalisation d'aubes en matériau composite pour des turbomachines a déjà été proposée.

Les matériaux composites à matrice organique (CMO) et les matériaux composites à matrice céramique (CMC) viennent en remplacement des pièces en matériau métallique dans certaines parties des turbomachines. Leur utilisation contribue à optimiser les performances des aéronefs notamment par l'amélioration du rendement de la turbomachine et la baisse de la masse globale de la turbomachine, réduisant de manière significative les émissions nocives pour l'environnement (CO,CO2, NOx, ...).

Le document US 9 080 454 décrit la fabrication d'une aube de turbomachine en matériau composite comprenant un renfort fibreux densifié par une matrice. De façon plus précise, ce procédé présente la particularité que l'ébauche fibreuse réalisée par tissage tridimensionnel est mise en forme pour obtenir une préforme fibreuse en une seule pièce ayant une première partie formant préforme de pale et pied d'aube et au moins une deuxième partie formant préforme de plateforme d'aube. Ainsi, après densification de la préforme, il est possible d'obtenir une aube en matériau composite ayant un renfort fibreux constitué par la préforme et densifié par la matrice, et formant une seule pièce avec plateforme munie de becquets de recouvrement. La réalisation du renfort fibreux par tissage tridimensionnel en une seule pièce présente plusieurs avantages comme notamment celui de conférer à l'aube de très bonnes propriétés mécaniques, en particulier une très bonne résistance au délaminage, et celui de permettre la réalisation de pièce de géométries complexes.

Les documents WO 2022/129733, WO 2013/034857 et US 2017/198591 divulguent également des préformes fibreuses d'aubes de turbomachine en matériau composite. WO 2022/129733 en particulier divulgue une préforme fibreuse d'aube pour une turbomachine, avec des parties de préforme de première et deuxième plateformes, des parties de préforme de murets amont et aval, des parties de préforme de becquets amont et aval, et une partie de préforme de pale.

Sur une aube de turbine à gaz, des fonctions secondaires d'étanchéité et d'aérodynamisme sont à prévoir. En partie inférieure de l'aube, c'est-à-dire au voisinage du pied d'aube, ces fonctions sont assurées par des plateformes reliées entre elles par des murets et des becquets de recouvrement. Dans le cas d'une aube en matériau composite ayant un renfort fibreux réalisé par tissage tridimensionnel en une seule pièce, le déploiement des plateformes, des murets et des becquets lors de la mise en forme de l'ébauche fibreuse (réalisation de la préforme de l'aube) peut s'avérer difficile en raison des limites de la déployabilité des textures tissées tridimensionnel et de la problématique du point triple à l'intersection des murets, des becquets et du pied d'aube.

### Exposé de l'invention

Il est donc souhaitable de pouvoir proposer une solution pour la réalisation d'aubes en matériau composite à partir d'un tissage tridimensionnel qui ne présente pas les inconvénients précités.

A cet effet, l'invention propose un procédé de fabrication d'une préforme fibreuse d'aube de turbomachine en matériau composite, le procédé comportant :
- la formation par tissage tridimensionnel ou multicouches entre une pluralité de couches de fils de chaîne et une pluralité de couches de fils de trame d'une ébauche fibreuse s'étendant, suivant une direction longitudinale correspondant à la direction longitudinale de l'aube à réaliser, entre des première et deuxième extrémités longitudinales, l'ébauche fibreuse s'étendant, suivant une direction transversale correspondant à la direction transversale de l'aube à réaliser, entre des première et deuxième extrémités transversales destinées à former respectivement un bord d'attaque et un bord de fuite de l'aube, l'ébauche fibreuse s'étendant, suivant une direction d'épaisseur de l'ébauche, entre des première et deuxième faces destinées à former respectivement une face intrados et une face extrados de l'aube,
   l'ébauche fibreuse étant séparée suivant la direction d'épaisseur en des première à cinquième parties dans des première à quatrième déliaisons s'étendant chacune suivant la direction longitudinale à partir d'un fond de déliaison présent à une distance déterminée de la première extrémité longitudinale de l'ébauche fibreuse, la première partie étant située entre les deuxième et quatrième parties, d'une part, et les troisième et cinquième partie, d'autre part, la première partie étant reliée par tissage aux deuxième à cinquième parties dans une zone s'étendant entre la première extrémité longitudinale de l'ébauche et les fond des déliaisons,
   les quatrième et cinquième parties comprenant du côté de la première extrémité transversale de l'ébauche une portion dans laquelle les fils de chaîne ne sont pas tissés avec les fils de trame de manière à définir des première et deuxième portions de tissu unidirectionnel, chaque portion de tissu unidirectionnel s'étendant sur une distance déterminée suivant la direction longitudinale au moins à partir du fond des troisième et quatrième déliaisons et sur une distance déterminée suivant la direction transversale à partir de la première extrémité transversale,
   les deuxième et troisième parties comprenant du côté de la deuxième extrémité transversale une portion dans laquelle les fils de chaîne ne sont pas tissés avec les fils de trame de manière à définir des troisième et quatrième portions de tissu unidirectionnel, chaque portion de tissu unidirectionnel s'étendant sur une distance déterminée suivant la direction longitudinale au moins à partir du fond des première et deuxième déliaisons et sur une distance déterminée suivant la direction transversale à partir de la deuxième extrémité transversale,
- la formation, à partir de l'ébauche fibreuse, d'une préforme de l'aube à réaliser, par dépliage de part et d'autre de la première partie de l'ébauche de segments des deuxièmes à cinquième parties non liés à la première partie et par la mise en forme des segments dépliés des deuxième à cinquième parties pour former des parties de préformes de plateformes, de murets et de becquets, la mise en forme des segments des deuxième à cinquième parties comprenant le rabattage des premières à quatrième portions de tissu unidirectionnel sur la première partie.

La mise en forme des murets et des becquets est grandement facilité par la présence de portions de tissu unidirectionnel au niveau des points triples de l'ébauche fibreuse. En effet, les contraintes et tensions induites dans l'ébauche au niveau des liaisons des deuxième à cinquième parties avec la première partie peuvent être considérablement réduites grâce au relâchement procuré par les portions de tissu unidirectionnel. Il est ainsi possible d'obtenir des préformes d'aubes mobiles ayant une géométrie complexe à partir d'une ébauche fibreuse tissée en une seule pièce.

Selon une caractéristique du procédé de l'invention, la mise en forme des segments dépliés des quatrième et cinquième parties comprend la formation de parties de préforme d'une première plateforme, de parties de préforme d'un muret amont, et de parties de préforme d'un becquet amont, et dans lequel la mise en forme des segments dépliés des deuxième et troisième parties comprend la formation de parties de préforme d'une deuxième plateforme, de parties de préforme d'un muret aval, et de parties de préforme d'un becquet aval.

Selon une autre caractéristique du procédé de l'invention, la formation des parties de préforme d'un muret amont et des parties de préforme d'un becquet amont comprend le rabattage suivant la direction transversale d'une première partie des première et deuxième portions de tissu unidirectionnel sur une deuxième partie desdites première et deuxième portions de tissu unidirectionnel s'étendant suivant la direction longitudinale.

Selon une autre caractéristique du procédé de l'invention, la formation des parties de préforme d'un muret aval et des parties de préforme d'un becquet aval comprend le rabattage suivant la direction transversale d'une première partie des troisième et quatrième portions de tissu unidirectionnel sur la première partie.

L'invention a également pour objet un procédé de fabrication d'une aube fixe ou mobile de turbomachine en matériau composite, le procédé comportant :
- la fabrication d'une préforme d'aube de turbomachine selon le procédé de fabrication d'une préforme fibreuse d'aube,
- la densification de la préforme par une matrice pour obtenir une aube en matériau composite ayant des première et deuxième plateformes intégrées, un muret amont et un muret aval intégrés, et un becquet amont et un becquet aval intégrés.

L'invention a encore pour objet une préforme fibreuse d'aube pour une turbomachine présentant un tissage tridimensionnel ou multicouches comprenant en une seule pièce des parties de préforme de première et deuxième plateformes, des parties de préforme de murets amont et aval, des parties de préforme de becquets amont et aval, et une partie de préforme de pale, la préforme comprenant en outre des premières et deuxième portions de tissu unidirectionnel rabattues sur la partie de préforme d'échasse et des troisième et quatrième portions de tissu unidirectionnel rabattues sur la partie de pale.

Selon une caractéristique de la préforme de l'invention, une première partie des première et deuxième portions de tissu unidirectionnel est rabattue suivant la direction transversale sur la partie de préforme de pale au niveau des parties de préforme de muret amont et des parties de préforme de becquet amont.

Selon une caractéristique de la préforme de l'invention, une partie des troisième et quatrième portions de tissu unidirectionnel est rabattue suivant la direction transversale sur une deuxième partie desdites première et deuxième portions de tissu unidirectionnel s'étendant suivant la direction longitudinale au niveau des parties de préforme de muret aval et des parties de préforme de becquet aval.

Selon une autre caractéristique de la préforme de l'invention, celle-ci comprend en outre une partie de préforme de pied et une partie de préforme d'échasse.

L'invention concerne en outre une aube de turbomachine en matériau composite comprenant un renfort fibreux densifié par une matrice, l'aube comprenant des première et deuxième plateformes, des murets amont et aval, des becquets amont et aval et une pale, le renfort fibreux comprenant une préforme fibreuse d'aube selon l'invention.

L'invention concerne en outre une aube mobile de turbomachine en matériau composite comprenant un renfort fibreux densifié par une matrice, l'aube comprenant un pied, une échasse, des première et deuxième plateformes, des murets amont et aval, des becquets amont et aval et une pale, le renfort fibreux comprenant une préforme fibreuse d'aube selon l'invention.

L'invention concerne en outre un moteur aéronautique comprenant une pluralité d'aubes selon l'invention.

L'invention concerne en outre un aéronef comprenant au moins un moteur selon l'invention.

### Brève description des dessins

[Fig. 1] La figure 1 est une vue schématique en plan d'une ébauche fibreuse tissée destinée à la réalisation d'une préforme fibreuse d'aube mobile conformément à un mode de réalisation de l'invention,
[Fig. 2] La figure 2 est une vue latérale en coupe de l'ébauche de la figure 1 selon le plan II-II de la figure 1,
[Fig. 3] La figure 3 est une vue latérale en coupe de l'ébauche de la figure 1 selon le plan III-III de la figure 1,
[Fig. 4] La figure 4 est une vue latérale en coupe de l'ébauche de la figure 1 selon le plan IV-IV de la figure 1,
[Fig. 5] La figure 5 est une vue schématique à échelle agrandie de plans de tissage de l'ébauche de la figure 1,
[Fig. 6] La figure 6 est une vue schématique à échelle agrandie de plans de tissage de l'ébauche de la figure 1,
[Fig. 7] La figure 7 est une vue schématique en perspective montrant une étape la réalisation d'une préforme d'aube mobile à partir de l'ébauche fibreuse des figures 1 à 4,
[Fig. 8] La figure 8 une vue schématique en perspective montrant une autre étape la réalisation d'une préforme d'aube mobile à partir de l'ébauche fibreuse des figures 1 à 4,
[Fig. 9] La figure 9 une vue schématique en perspective montrant une autre étape la réalisation d'une préforme d'aube mobile à partir de l'ébauche fibreuse des figures 1 à 4,
[Fig. 10A] La figure 10A une vue schématique en perspective montrant une autre étape la réalisation d'une préforme d'aube mobile à partir de l'ébauche fibreuse des figures 1 à 4,
[Fig. 10B] La figure 10B une vue schématique en perspective montrant une autre étape la réalisation d'une préforme d'aube mobile à partir de l'ébauche fibreuse des figures 1 à 4,
[Fig. 11A] La figure 11A une vue schématique en perspective montrant une autre étape la réalisation d'une préforme d'aube mobile à partir de l'ébauche fibreuse des figures 1 à 4,
[Fig. 11B] La figure 11B une vue schématique en perspective montrant une autre étape la réalisation d'une préforme d'aube mobile à partir de l'ébauche fibreuse des figures 1 à 4,
[Fig. 12] La figure 12 une vue schématique en perspective montrant une aube mobile obtenue à partir de la préforme d'aube des figures 11A et 11B.

### Description des modes de réalisation

L'invention est applicable à différents types d'aubes de turbomachine à plateformes intégrées. Elle est notamment applicable à des aubes fixes de compresseur, c'est-à-dire ne comportant pas de pied et d'échasse. Elle est également applicable à des aubes mobiles de compresseur et de turbine de différents corps de turbines à gaz.

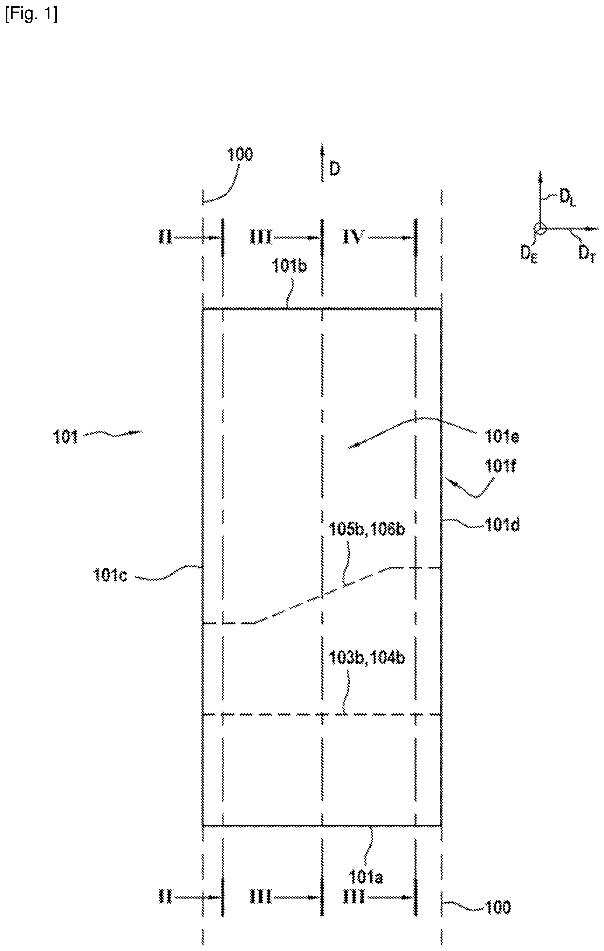

La figure 1 montre en plan une ébauche fibreuse 101 à partir de laquelle une préforme fibreuse d'aube mobile peut être formée conformément à un mode de réalisation de l'invention.

L'ébauche 101 est obtenue à partir d'une bande 100 tissée par tissage tridimensionnel (3D), la bande 100 s'étendant de façon générale dans une direction D. Par « tissage tridimensionnel » ou « tissage 3D », on entend ici un mode de tissage par lequel certains au moins des fils de trame lient des fils de chaîne sur plusieurs couches de fils de chaîne ou inversement. Un exemple de tissage tridimensionnel est le tissage dit à armure « interlock ». Le tissage est réalisé par exemple avec des fils de chaîne s'étendant dans la direction D, étant noté qu'un tissage avec des fils de trame s'étendant dans cette direction est également possible. Une pluralité d'ébauches 101 peuvent être tissées l'une à la suite de l'autre dans la direction D. On peut aussi tisser simultanément plusieurs rangées parallèles d'ébauches 101.

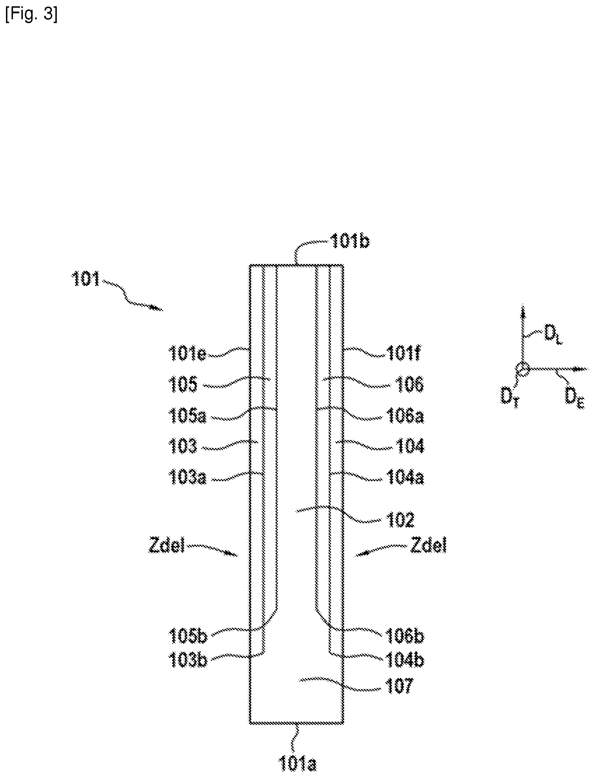

Dans le mode de réalisation des figures 1 à 4, une ébauche fibreuse 101 s'étend, suivant une direction longitudinale D_{L} correspondant à la direction longitudinale de l'aube à réaliser, entre des première et deuxième extrémités longitudinales 101a, 101b et, suivant une direction transversale D_{T} correspondant à la direction transversale de l'aube à réaliser, entre des première et deuxième extrémités transversales 101c, 101d, destinées à former respectivement un bord d'attaque et un bord de fuite de l'aube. L'ébauche fibreuse s'étend en outre, suivant une direction d'épaisseur D_{E} de l'ébauche, entre des première et deuxième faces 101e, 101f, destinées à former respectivement une face intrados et une face extrados de l'aube.

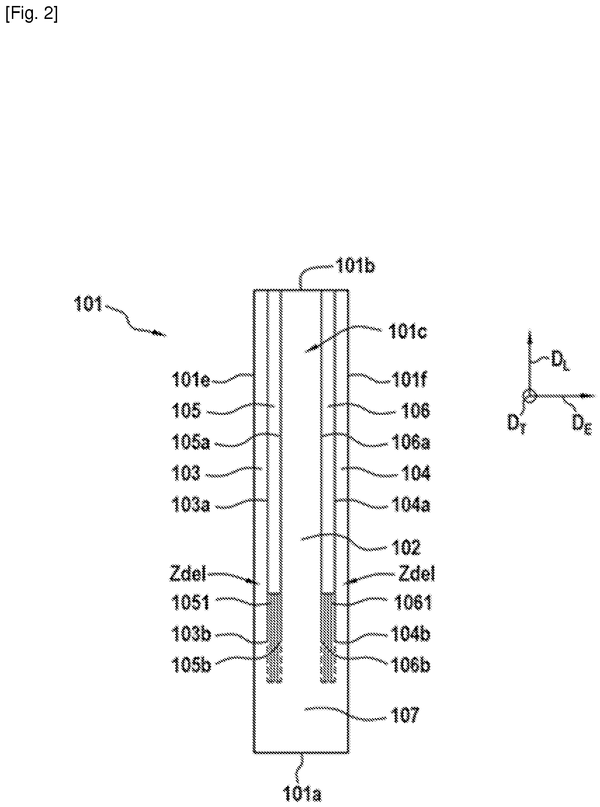

L'ébauche fibreuse 101 comprend dans son épaisseur (direction d'épaisseur D_{E}) des première à cinquième parties 102, 103, 104, 105, 106 s'étendant suivant la direction longitudinale D_{L}. La première partie 102 déliée des deuxième à cinquième parties 106 et 107 au niveau d'une zone de déliaison Z_{del} comprenant des première à quatrième déliaisons 103a, 104a, 105a, 106a (figures 2 à 4). Les déliaisons 103a, 104a, 105a, 106a s'étendent sur toute la largeur de l'ébauche 101 suivant la direction transversale D_{T}. Les déliaisons 103a, 104a, 105a, 106a s'étendent chacune suivant la direction longitudinale D_{L} à partir d'un fond de déliaison 103b, 104b, 105b, 106b présent à une distance déterminée de la première extrémité longitudinale 101a de l'ébauche fibreuse 101. La première partie 102 est située suivant la direction d'épaisseur D_{E} entre les deuxième et quatrième parties 103, 105, d'une part, et les troisième et cinquième partie 104, 106, d'autre part. La première partie 102 est liée aux deuxième à cinquième parties 103 à 106 par tissage 3D dans une zone 107 s'étendant entre la première extrémité longitudinale 101a de l'ébauche et les fonds 103b, 104b, 105b, 106b des déliaisons 103a, 104a, 105a, 106a. La zone 107 est destinée à former un pied d'aube. Dans l'exemple décrit ici, les fonds de déliaison 103b et 104b s'étendent entre les première et deuxième extrémités transversales 101c, 101d suivant une direction rectiligne parallèle à la direction transversale D_{T} (figure 1) de manière à former une plateforme inférieure plane tandis que les fonds de déliaison 105b et 106b présentent une pente entre les première et deuxième extrémités transversales 101c, 101d (figure 1) de manière à former une plateforme supérieure inclinée comme expliqué ci-après.

De façon bien connue, une déliaison est ménagée entre deux couches de fils de chaîne en omettant de faire passer un fil de trame à travers la zone de déliaison pour lier des fils de couches de chaîne situées de part et d'autre de la déliaison.

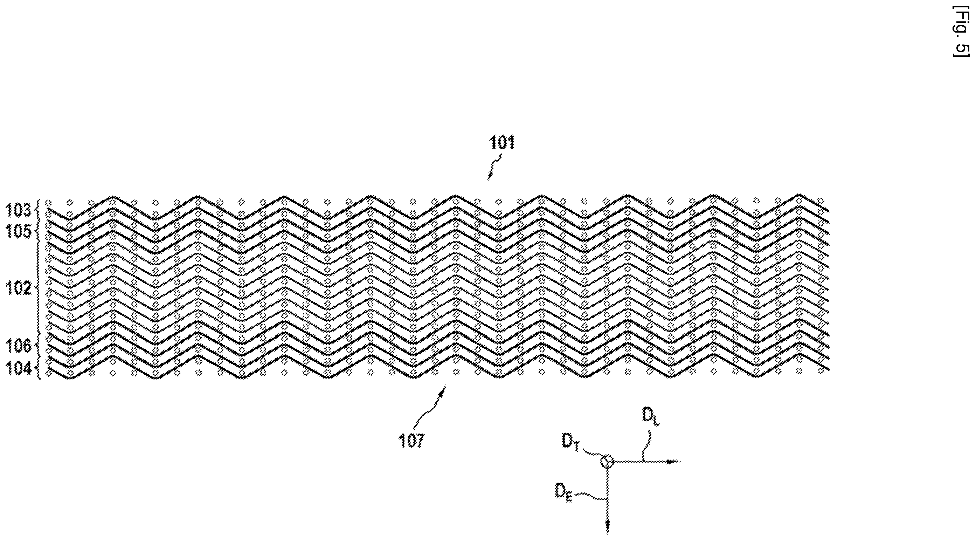

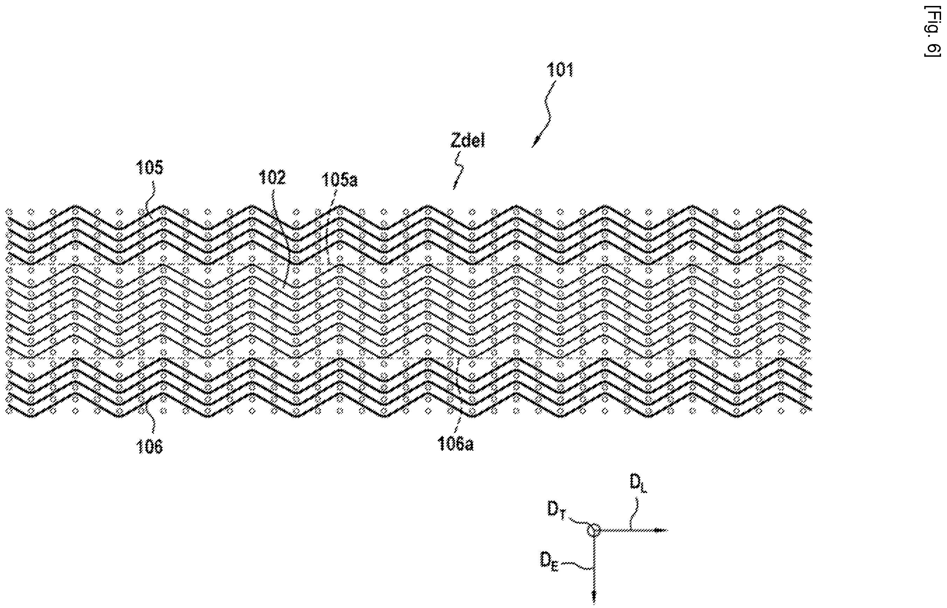

Les plans des figures 5 et 6 montrent un exemple de tissage 3D avec armure interlock et déliaisons 105a et 106a, les déliaisons 103a et 104a étant obtenues de la même façon que les déliaisons 105a et 106a. Sur la figure 6, les déliaisons sont représentées par des tirets. La partie 102 comprend une pluralité de couches de fils de chaîne (8 dans l'exemple illustré) qui sont liées par tissage 3D. Les parties 105 et 106 comprennent chacune une pluralité de couches de fils de chaîne (4 dans l'exemple illustré sur la figure 6) qui sont liées entre elles par tissage 3D.

Dans la zone 107 située entre la première extrémité longitudinale 101a et les déliaisons 103a, 104a, 105a et 106a délimitées par les fonds de déliaison 103b, 104b, 105b et 106b les couches de fils de chaîne des parties 102 à 106 sont toutes liées entre elles (figure 5).

Conformément à l'invention, les quatrième et cinquième parties 105, 106 comprennent du côté de la première extrémité transversale 101c de l'ébauche une portion dans laquelle les fils de chaîne ne sont pas tissés avec les fils de trame de manière à définir des première et deuxième portions de tissu unidirectionnel 1051 et 1061 (figure 2). Chaque portion de tissu unidirectionnel 1051, 1061 s'étend sur une distance déterminée suivant la direction longitudinale DL au moins à partir du fond de déliaison 105b, 106b des troisième et quatrième déliaisons 105a, 106a et sur une distance déterminée suivant la direction transversale DT à partir de la première extrémité transversale 101c. Dans l'exemple décrit ici, les portions de tissu unidirectionnel 1051 et 1061 s'étendent de part et d'autres des fonds de déliaison 105b, 106b (figure 2).

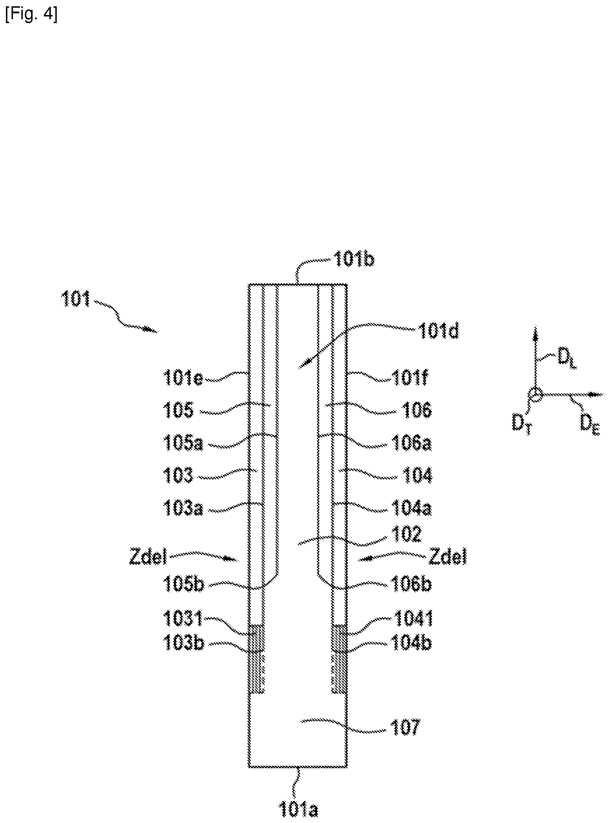

De même, les deuxième et troisième parties 103, 104 comprennent du côté de la deuxième extrémité transversale 101d une portion dans laquelle les fils de chaîne ne sont pas tissés avec les fils de trame de manière à définir des troisième et quatrième portions de tissu unidirectionnel 1031, 1041 (figure 4). Chaque portion de tissu unidirectionnel s'étend sur une distance déterminée suivant la direction longitudinale DL au moins à partir du fond des première et deuxième déliaisons 103a, 104a et sur une distance déterminée suivant la direction transversale DT à partir de la deuxième extrémité transversale 101d. Dans l'exemple décrit ici, les portions de tissu unidirectionnel 1031 et 1041 s'étendent de part et d'autres des fonds de déliaison 103b, 104b (figure 4).

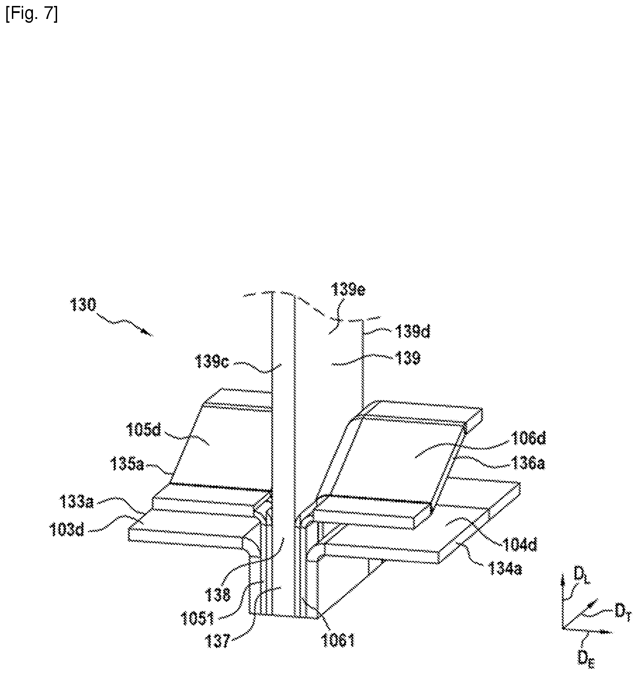

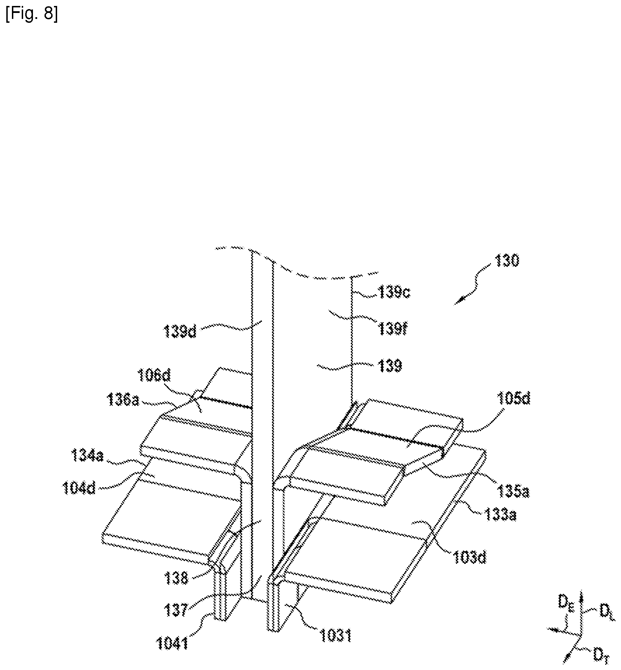

Après tissage, comme montré sur les figures 7 et 8, une préforme fibreuse 130 de l'aube à réaliser est formée à partir de l'ébauche 101. Plus précisément, la première partie 102 est mise en forme pour former une partie de préforme de pied 137, une partie de préforme d'échasse 138 et une partie de préforme de pale ou profil aérodynamique 139 comportant des premier et deuxième bords transversaux 139c et 139d destinés à former respectivement les bords d'attaque et de fuite de l'aube à réaliser. La partie de préforme de profil aérodynamique comporte également des première et deuxième faces 139e et 139f destinées à former respectivement une face intrados et une face extrados de l'aube à réaliser. Les parties 103 et 104 non liées aux parties 105 et 106 respectivement sont découpées pour former des segments 103d et 104d. De même, les parties 105 et 106 non liées à la partie 102 sont découpées pour former des segments 105d et 106d. Les segments 103d et 104d non liées aux parties 105 et 106 respectivement et les segments 105d et 106d non liées à la partie 102 sont dépliés ou déployés. Les dépliages sont réalisés au niveau des fonds de déliaison. Les segments 103d, 104d, sont tout d'abord mis en forme pour former des parties de préforme inférieure 133a et 134a tandis que les segments 105d et 106d sont tout d'abord mis en forme pour former des parties de préforme supérieure 135a et 136a.

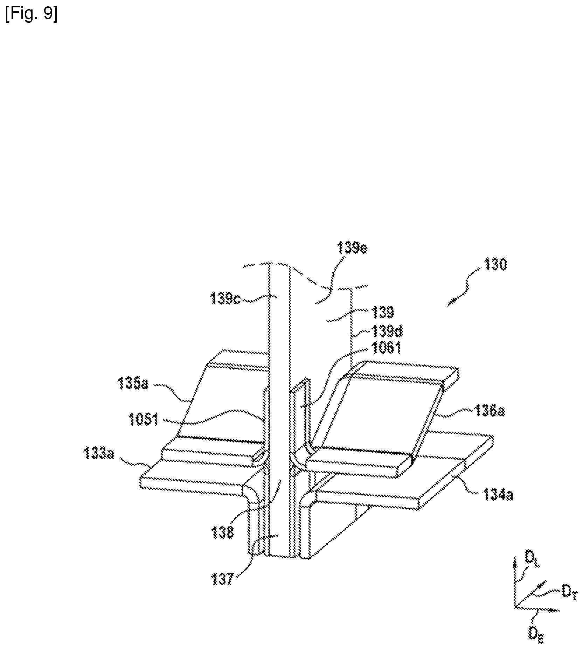

Comme illustré sur la figure 9, les première et deuxième portions de tissu unidirectionnel 1051 et 1061 sont d'abord rabattues suivant la direction longitudinale DL sur la première partie 102 de l'ébauche mise en forme pour former la partie de préforme de pale 139.

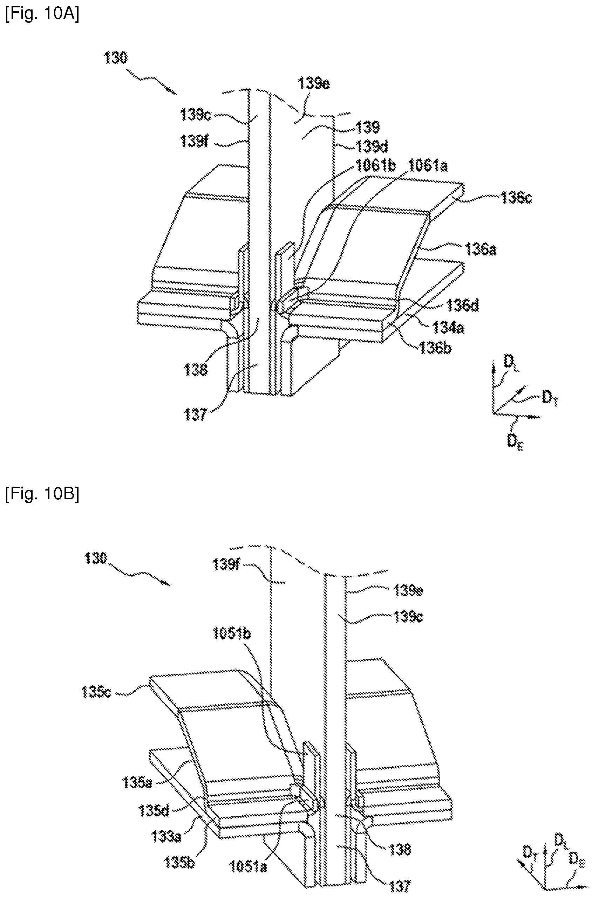

Comme illustré sur les figures 10A et 10B, la mise en forme des segments dépliés 105d, 106d se poursuit pour former des parties de préforme d'un muret amont 135d, 136d, des parties de préforme d'un becquet amont 135b, 136b, et des parties de préformes d'un becquet aval 135c et 136c. La formation des parties de préforme de muret amont 135d, 136d et des parties de préforme de becquet amont 135b, 136b comprend le rabattage suivant la direction transversale DT d'une première partie 1051a, 1061a respectivement des première et deuxième portions de tissu unidirectionnel 1051, 1061 sur une deuxième partie 1051b, 1061b respectivement des première et deuxième portions de tissu unidirectionnel 1051, 1061 maintenue contre la partie de préforme de pale 139 suivant la direction longitudinale DL. On facilite ainsi grandement la mise en forme des parties de préforme de muret amont 135d, 136d et des parties de préforme de becquet amont 135b, 136b en réduisant les tensions et contraintes sur la texture de l'ébauche fibreuse en particulier au niveau des pliures de type coin de valise.

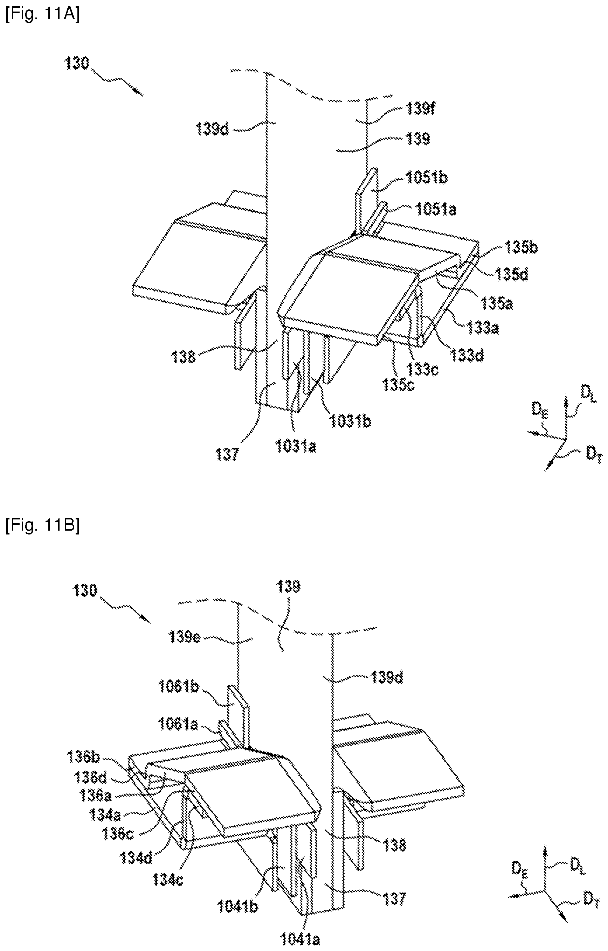

Comme illustré sur les figures 11A et 11B, la mise en forme des segments dépliés 103d, 104d se poursuit pour former des parties de préforme d'un muret aval 133d, 134d, et de parties de préforme d'un becquet aval 133c, 134c.La formation des parties de préforme de muret aval 133d, 134d et des parties de préforme de becquet aval 133c, 134c comprend le rabattage suivant la direction transversale DT d'une première partie 1031a, 1041a respectivement des troisième et quatrième portions de tissu unidirectionnel 1031, 1041 sur une deuxième partie 1031b, 1041b respectivement des troisième et quatrième portions de tissu unidirectionnel 1031, 1041 maintenue contre la partie de préforme d'échasse 138 suivant la direction longitudinale DL. On facilite ainsi grandement la mise en forme des parties de préforme de muret aval 133d et 134d et des parties de préforme de becquet aval 133d et 134d en réduisant les tensions et contraintes sur la texture de l'ébauche fibreuse en particulier au niveau des pliures de type coin de valise.

On procède ensuite à la densification de la préforme fibreuse 130. La densification de la préforme fibreuse destinée à former le renfort fibreux de l'aube à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou le procédé d'injection de charge céramique (Slurry Cast) ou le procédé d'imprégnation d'un alliage de silicium (MI ou RMI) ou encore suivant un enchaînement d'un ou plusieurs de ces procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC ou SiCN, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injectée la résine et les orifices d'évacuation de cette dernière afin de contrôler et d'optimiser l'imprégnation de la préforme par la résine.

La densification de la préforme peut encore être réalisée par imprégnation de polymère et pyrolyse (PIP), ou par imprégnation d'une barbotine (« slurry cast »), contenant par exemple du SiC et des liants organiques, suivie d'une infiltration avec du silicium liquide (« Melt infiltration »).

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

Les procédés de densification décrits ci-avant permettent de réaliser, à partir de la structure fibreuse de l'invention, principalement des pièces en matériau composite à matrice organique (CMO), à matrice carbone (C/C) et à matrice céramique (CMC).

Dans le cas de la réalisation d'une pièce en matériau composite oxyde/oxyde, la structure fibreuse est imprégnée avec une barbotine chargée de particules d'oxyde réfractaire. Après élimination de la phase liquide de la barbotine, la préforme ainsi obtenue est soumise à un traitement thermique afin de fritter les particules et obtenir une matrice d'oxyde réfractaire. L'imprégnation de la structure peut être réalisée avec des procédés utilisant un gradient de pression, comme les procédés de type moulage par injection dits « RTM » ou aspiration de poudre submicronique dits « APS ».

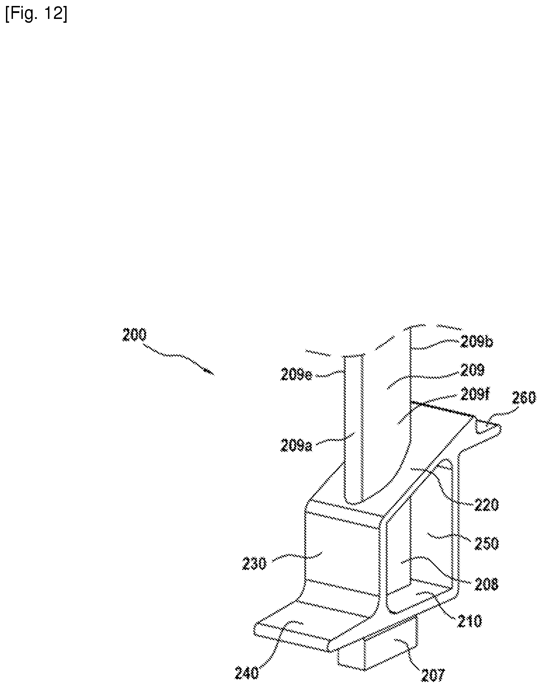

Après densification, on obtient une aube 200 en matériau composite qui, comme illustré sur la figure 12, comporte dans sa partie inférieure un pied 207 formé par la partie de préforme de pied 137 de la préforme fibreuse 130 qui se prolonge par une échasse 208 formée par la partie de préforme d'échasse 138 de la préforme 130 et une pale ou profil aérodynamique 209 formée par la partie de préforme de pale 139 de la préforme 130. La pale 209 comporte un bord d'attaque 209a et un bord de fuite 209b correspondant respectivement aux premier et deuxième bords transversaux 139c et 139d de la préforme fibreuse 130 ainsi qu'une face intrados et une face extrados 209e et 209f correspondant respectivement aux première et deuxième faces 139e et 139f de la préforme 130. L'aube 200 comprend en outre une plateforme inférieure 210 correspondant aux parties de préforme de plateforme inférieure 133a et 134a de la préforme 130, une plateforme supérieure 220 correspondant aux parties de préforme supérieure 135a et 136a de la préforme 130, un muret amont 230 correspondant aux parties de préforme de muret amont 135d et 136d de la préforme 130, un becquet de recouvrement amont 240 correspondant aux parties de préforme de becquet amont 135b et 136b de la préforme 130, un muret aval 250 correspondant aux parties de préforme de muret aval 133d et 134d de la préforme 130 et un becquet de recouvrement aval 260 correspondant aux parties de préformes de becquet aval 135c et 136c de la préforme 130.

## Revendications

1. Procédé de fabrication d'une préforme fibreuse d'aube de turbomachine en matériau composite, le procédé comportant :
- la formation par tissage tridimensionnel ou multicouches entre une pluralité de couches de fils de chaîne et une pluralité de couches de fils de trame d'une ébauche fibreuse (101) s'étendant, suivant une direction longitudinale (D_{L}) correspondant à la direction longitudinale de l'aube à réaliser, entre des première et deuxième extrémités longitudinales (101a, 101b), l'ébauche fibreuse s'étendant, suivant une direction transversale (D_{T}) correspondant à la direction transversale de l'aube à réaliser, entre des première et deuxième extrémités transversales (101c, 101d) destinées à former respectivement un bord d'attaque et un bord de fuite de l'aube, l'ébauche fibreuse s'étendant, suivant une direction d'épaisseur (D_{E}) de l'ébauche, entre des première et deuxième faces (101e, 101f) destinées à former respectivement une face intrados et une face extrados de l'aube,
l'ébauche fibreuse étant séparée suivant la direction d'épaisseur en des première à cinquième parties (102, 103, 104, 105, 106) dans des première à quatrième déliaisons (103a, 104a, 105a, 106a) s'étendant chacune suivant la direction longitudinale à partir d'un fond de déliaison (103b, 104b, 105b, 106b) présent à une distance déterminée de la première extrémité longitudinale (101a) de l'ébauche fibreuse (101), la première partie (102) étant située entre les deuxième et quatrième parties (103, 105), d'une part, et les troisième et cinquième partie (104, 106), d'autre part, la première partie étant reliée par tissage aux deuxième à cinquième parties dans une zone s'étendant entre la première extrémité longitudinale (101a) de l'ébauche et les fond (103b, 104b, 105b, 106b) des déliaisons (103a, 104a, 105a, 106a),
les quatrième et cinquième parties (105, 106) comprenant du côté de la première extrémité transversale (101c) de l'ébauche une portion dans laquelle les fils de chaîne ne sont pas tissés avec les fils de trame de manière à définir des première et deuxième portions de tissu unidirectionnel (1051, 1061), chaque portion de tissu unidirectionnelle s'étendant sur une distance déterminée suivant la direction longitudinale au moins à partir du fond (105b, 106b) des troisième et quatrième déliaisons (105a, 106a) et sur une distance déterminée suivant la direction transversale à partir de la première extrémité transversale (101c),
les deuxième et troisième parties (103, 104) comprenant du côté de la deuxième extrémité transversale (101d) une portion dans laquelle les fils de chaîne ne sont pas tissés avec les fils de trame de manière à définir des troisième et quatrième portions de tissu unidirectionnel (1031, 1041), chaque portion de tissu unidirectionnelle s'étendant sur une distance déterminée suivant la direction longitudinale au moins à partir du fond (103b, 104b) des première et deuxième déliaisons (103a, 104a) et sur une distance déterminée suivant la direction transversale à partir de la deuxième extrémité transversale (101d),
- la formation, à partir de l'ébauche fibreuse, d'une préforme (130) de l'aube à réaliser, par dépliage de part et d'autre de la première partie (102) de l'ébauche de segments (103d, 104d, 105d, 106d) des deuxièmes à cinquième parties (103, 104, 105, 106) non liés à la première partie et par la mise en forme des segments dépliés des deuxième à cinquième parties pour former des parties de préformes de plateformes (133a, 134a, 135a, 136a), de murets (133d 134d, 135d, 136d et de becquets (133b, 134b,135b, 136b, 133c, 134c, 135c, 136c), la mise en forme des segments des deuxième à cinquième parties comprenant le rabattage des premières à quatrième portions de tissu unidirectionnel sur la première partie.

2. Procédé selon la revendication 1, dans lequel la mise en forme des segments dépliés (105d, 106d) des quatrième et cinquième parties (105, 106) comprend la formation de parties de préforme d'une première plateforme (135a, 136a), de parties de préforme d'un muret amont (135d, 136d), et de parties de préforme d'un becquet amont (135b, 136b), et dans lequel la mise en forme des segments dépliés (103d, 104d) des deuxième et troisième parties (103, 104) comprend la formation de parties de préforme d'une deuxième plateforme (133a, 134a), de parties de préforme d'un muret aval (133d, 134d), et de parties de préforme d'un becquet aval (133c, 134c).

3. Procédé selon la revendication 2, dans lequel la formation des parties de préforme d'un muret amont (135d, 136d) et des parties de préforme d'un becquet amont (135b, 136b) comprend le rabattage suivant la direction transversale d'une partie (1051a, 1061a) des première et deuxième portions de tissu unidirectionnel (1051, 1061) sur une deuxième partie (1051b, 1061b) desdites première et deuxième portions de tissu unidirectionnel s'étendant suivant la direction longitudinale.

4. Procédé selon la revendication 2 ou 3, dans lequel la formation des parties de préforme d'un muret aval (133d, 134d) et des parties de préforme d'un becquet aval (133c, 134c) comprend le rabattage suivant la direction transversale d'une partie (1031a, 1041a) des troisième et quatrième portions de tissu unidirectionnel (1031, 1041) sur la première partie.

5. Procédé de fabrication d'une aube de turbomachine en matériau composite, le procédé comportant :
- la fabrication d'une préforme d'aube de turbomachine selon l'une quelconque des revendications 1 à 4,
- la densification de la préforme par une matrice pour obtenir une aube en matériau composite ayant des première et deuxième plateformes intégrées, un muret amont et un muret aval intégrés, et un becquet amont et un becquet aval intégrés.

6. Préforme fibreuse (130) d'aube pour une turbomachine présentant un tissage tridimensionnel ou multicouches comprenant en une seule pièce, des parties de préforme de première et deuxième plateformes (135a, 136a, 133a, 134a), des parties de préforme de murets amont et aval (135d, 136d, 133d, 134d), des parties de préforme de becquets amont et aval (135b, 136b, 133c, 134c), et une partie de préforme de pale (139), la préforme comprenant en outre des premières et deuxième portions de tissu unidirectionnel (1031, 1041) rabattues sur une partie de préforme d'échasse (138) et des troisième et quatrième portions de tissu unidirectionnel (1051, 1061) rabattues sur la partie de pale.

7. Préforme selon la revendication 6, dans laquelle une partie (1031a, 1041a) des première et deuxième portions de tissu unidirectionnel (1031, 1041) est rabattue suivant la direction transversale sur la partie de préforme de pale (139) au niveau des parties de préforme de muret amont et des parties de préforme de becquet amont.

8. Préforme selon la revendication 6 ou 7, dans laquelle une partie (1051a, 1061a) des troisième et quatrième portions de tissu unidirectionnel (1051, 1061) est rabattue suivant la direction transversale sur une deuxième partie (1051b, 1061b) desdites première et deuxième potions de tissu unidirectionnel s'étendant suivant la direction longitudinale au niveau des parties de préforme de muret aval et des parties de préforme de becquet aval.

9. Préforme selon l'une quelconque des revendications 6 à 8, comprenant en outre une partie de préforme de pied (137).

10. Aube de turbomachine en matériau composite comprenant des première et deuxième plateformes, des murets amont et aval, des becquets amont et aval et une partie de pale, le renfort fibreux comprenant une préforme fibreuse d'aube selon l'une quelconque des revendications 6 à 8.

11. Aube mobile de turbomachine en matériau composite comprenant un pied, une échasse, des première et deuxième plateformes, des murets amont et aval, des becquets amont et aval et une partie de pale, le renfort fibreux comprenant une préforme fibreuse d'aube selon la revendication 9.

12. Moteur aéronautique comprenant une pluralité d'aubes selon la revendication 10 ou une pluralité d'aubes mobiles selon la revendication 11.

13. Aéronef comprenant au moins un moteur selon la revendication 12.

## Patentansprüche

1. Verfahren zur Herstellung einer Faservorform einer Turbomaschinenschaufel aus Verbundstoff, wobei das Verfahren aufweist:
- das Bilden eines Faserrohlings (101) durch dreidimensionales oder mehrlagiges Weben zwischen einer Vielzahl von Kettfadenschichten und einer Vielzahl von Schussfadenschichten, der sich in einer Längsrichtung (D_{L}), die der Längsrichtung der herzustellenden Schaufel entspricht, zwischen einem ersten und zweiten Längsende (101a, 101b) erstreckt, wobei sich der Faserrohling in einer Querrichtung (D_{T}), die der Querrichtung der herzustellenden Schaufel entspricht, zwischen einem ersten und zweiten Querende (101c, 101d) erstreckt, die jeweils eine Vorderkante und eine Hinterkante der Schaufel bilden sollen, wobei sich der Faserrohling in einer Dicke-Richtung (D_{E}) des Rohlings zwischen einer ersten und zweiten Fläche (101e, 101f) erstreckt, die jeweils eine Saugseite und eine Druckseite der Schaufel bilden sollen,
wobei der Faserrohling in der Dicke-Richtung in einen ersten bis fünften Teil (102, 103, 104, 105, 106) an einer ersten bis vierten Entbindung (103a, 104a, 105a, 106a) getrennt ist, die sich jeweils in Längsrichtung ab einem Entbindungsgrund (103b, 104b, 105b, 106b) erstrecken, der in einem bestimmten Abstand von dem ersten Längsende (101a) des Faserrohlings (101) angeordnet ist, wobei der erste Teil (102) einerseits zwischen dem zweiten und vierten Teil (103, 105) und andererseits zwischen dem dritten und fünften Teil (104, 106) liegt, wobei der erste Teil durch Weben mit dem zweiten bis fünften Teil in einem Bereich verbunden ist, der sich zwischen dem ersten Längsende (101a) des Rohlings und den Entbindungsgründen (103b, 104b, 105b, 106b) der Entbindungen (103a, 104a, 105a, 106a) erstreckt,
wobei der vierte und fünfte Teil (105, 106) auf der Seite des ersten Querendes (101c) des Rohlings einen Abschnitt umfassen, in dem die Kettfäden nicht mit den Schussfäden verwoben sind, um einen ersten und einen zweiten unidirektionalen Gewebeabschnitt (1051, 1061) zu definieren, wobei sich jeder unidirektionale Gewebeabschnitt über eine bestimmte Strecke in Längsrichtung mindestens ab dem Entbindungsgrund (105b, 106b) der dritten und vierten Entbindung (105a, 106a) und über eine bestimmte Strecke in Querrichtung ab dem ersten Querende (101c) erstreckt,
wobei der zweite und dritte Teil (103, 104) auf der Seite des zweiten Querendes (101d) einen Abschnitt umfassen, in dem die Kettfäden nicht mit den Schussfäden verwoben sind, um einen dritten und vierten unidirektionalen Gewebeabschnitt (1031, 1041) zu definieren, wobei sich jeder unidirektionale Gewebeabschnitt über eine bestimmte Strecke in Längsrichtung mindestens ab dem Entbindungsgrund (103b, 104b) der ersten und zweiten Entbindung (103a, 104a) und über eine bestimmte Strecke in Querrichtung ab dem zweiten Querende (101d) erstreckt,
- das Bilden einer Vorform (130) der herzustellenden Schaufel aus dem Faserrohling durch Aufklappen von Segmenten (103d, 104d, 105d, 106d) des zweiten bis fünften Teils (103, 104, 105, 106) beidseits des ersten Teils (102) des Rohlings, die nicht mit dem ersten Teils verbunden sind, und durch das Formen der aufgeklappten Segmente des zweiten bis fünften Teils, um Vorformteile von Plattformen (133a, 134a, 135a, 136a), Stegen (133d, 134d, 135d, 136d) und Spoilern (133b, 134b, 135b, 136b, 133c, 134c, 135c, 136c) zu bilden, wobei das Formen der Segmente des zweiten bis fünften Teils das Umlegen der ersten bis zum vierten unidirektionalen Gewebeabschnitt auf den ersten Teil umfasst.

2. Verfahren nach Anspruch 1, wobei das Formen der aufgeklappten Segmente (105d, 106d) des vierten und fünften Teils (105, 106) die Bildung von Vorformteilen einer ersten Plattform (135a, 136a), von Vorformteilen eines vorderen Stegs (135d, 136d) und von Vorformteilen eines vorderen Spoilers (135b, 136b) umfasst, und wobei das Formen der aufgeklappten Segmente (103d, 104d) des zweiten und dritten Teils (103, 104) die Bildung von Vorformteilen einer zweiten Plattform (133a, 134a), von Vorformteilen eines hinteren Stegs (133d, 134d) und von Vorformteilen eines hinteren Spoilers (133c, 134c) umfasst.

3. Verfahren nach Anspruch 2, wobei das Bilden der Vorformteile eines vorderen Stegs (135d, 136d) und der Vorformteile eines vorderen Spoilers (135b, 136b) das Umlegen in Querrichtung eines Teils (1051a, 1061a) des ersten und zweiten unidirektionalen Gewebeabschnitts (1051, 1061) auf einen zweiten Teil (1051b, 1061b) des ersten und zweiten unidirektionalen Gewebeabschnitts, die sich in Längsrichtung erstrecken, umfasst.

4. Verfahren nach Anspruch 2 oder 3, wobei das Bilden der Vorformteile eines hinteren Stegs (133d, 134d) und der Vorformteile eines hinteren Spoilers (133c, 134c) das Umlegen in Querrichtung eines Teils (1031a, 1041a) des dritten und vierten unidirektionalen Gewebeabschnitts (1031, 1041) auf den ersten Teil umfasst.

5. Verfahren zur Herstellung einer Turbomaschinenschaufel aus Verbundstoff, wobei das Verfahren aufweist:
- die Herstellung einer Turbomaschinenschaufel-Vorform nach einem der Ansprüche 1 bis 4,
- die Verdichtung der Vorform durch eine Matrix, um eine Schaufel aus Verbundstoff mit einer integrierten ersten und zweiten Plattform, einem integrierten vorderen Steg und hinteren Steg sowie einem integrierten vorderen Spoiler und hinteren Spoiler zu erhalten.

6. Faservorform (130) einer Schaufel für eine Turbomaschine, die eine dreidimensionale oder mehrlagige Webung aufweist, die in einem einzigen Teil Vorformteile einer erstes und zweiten Plattform (135a, 136a, 133a, 134a), Vorformteile einer vorderen und hinteren Wand (135d, 136d, 133d, 134d), Vorformteile eines vorderen und hinteren Spoilers (135b, 136b, 133c, 134c) und einen Schaufelblatt-Vorformteil (139) umfasst, wobei die Vorform ferner erste und einen zweiten unidirektionale Gewebeabschnitt (1031, 1041) umfasst, die auf einen Stelzen-Vorformabschnitt (138) umgelegt sind, und dritte und einen vierten unidirektionalen Gewebeabschnitt (1051, 1061), die auf den Schaufelblatt-Teil umgelegt sind.

7. Vorform nach Anspruch 6, wobei ein Teil (1031a, 1041a) des ersten und zweiten unidirektionalen Gewebeabschnitts (1031, 1041) in Querrichtung auf den Schaufelblatt-Vorformteil (139) im Bereich der vorderen Wand-Vorformteile und der vorderen Spoiler-Vorformteile umgelegt ist.

8. Vorform nach Anspruch 6 oder 7, wobei ein Teil (1051a, 1061a) des dritten und vierten unidirektionalen Gewebeabschnitts (1051, 1061) in Querrichtung auf einen zweiten Teil (1051b, 1061b) des ersten und zweiten unidirektionalen Gewebeabschnitts umgelegt ist, der sich in Längsrichtung im Bereich der hinteren Wand-Vorformteile und der hinteren Spoiler-Vorformteile erstreckt.

9. Vorform nach einem der Ansprüche 6 bis 8, die ferner einen Fuß-Vorformteil (137) umfasst.

10. Turbomaschinenschaufel aus Verbundstoff, die eine erste und zweite Plattform, eine vordere und hintere Wand, einen vorderen und hinteren Spoiler und einen Schaufelblatt-Teil umfasst, wobei die Faserverstärkung eine Schaufel-Faservorform nach einem der Ansprüche 6 bis 8 umfasst.

11. Laufschaufel einer Turbomaschine aus Verbundstoff, die einen Fuß, eine Stelze, eine erste und zweite Plattform, eine vordere und hintere Wand, einen vorderen und hinteren Spoiler und einen Schaufelblatt-Teil umfasst, wobei die Faserverstärkung eine Schaufel-Faservorform nach Anspruch 9 umfasst.

12. Luftfahrtantrieb, umfassend eine Vielzahl von Schaufeln nach Anspruch 10 oder eine Vielzahl von Laufschaufeln nach Anspruch 11.

13. Luftfahrzeug, umfassend mindestens einen Antrieb nach Anspruch 12.

## Claims

1. A method for manufacturing a fiber preform of a turbomachine blade made of composite material, the method comprising:
- the formation by three-dimensional or multi-layer weaving between a plurality of layers of warp yarns and a plurality of layers of weft yarns of a fiber blank (101) extending, along a longitudinal direction (D_{L}) corresponding to the longitudinal direction of the blade to be produced, between first and second longitudinal ends (101a, 101b), the fiber blank extending, along a transverse direction (D_{T}) corresponding to the transverse direction of the blade to be produced, between first and second transverse ends (101c, 101d) intended to form, respectively, a leading edge and trailing edge of the blade,
the fiber blank extending, along a thickness direction (D_{E}) of the blank, between the first and second faces (101e, 101f) intended to form, respectively, a pressure face and a suction face of the blade,
the fiber blank being separated along the thickness direction into first to fifth parts (102, 103, 104, 105, 106) in first to fourth non-interlinking sections (103a, 104a, 105a, 106a) each extending along the longitudinal direction from a bottom of a non-interlinking section (103b, 104b, 105b, 106b) present at a determined distance from the first longitudinal end (101a) of the fiber blank (101), the first part (102) being located between the second and fourth parts (103, 105), on one side, and the third and fifth parts (104, 106), on the other side, the first part being bound by weaving to the second to fifth parts in an area extending between the first longitudinal end (101a) of the blank and the bottoms (103b, 104b, 105b, 106b) of the non-interlinking sections (103a, 104a, 105a, 106a),
the fourth and fifth parts (105, 106) comprising on the side of the first transverse end (101c) of the blank a portion in which the warp yarns are not woven with the weft yarns so as to define first and second unidirectional fabric portions (1051, 1061), each unidirectional fabric portion extending over a predetermined distance along the longitudinal direction at least from the bottom (105b, 106b) of the third and fourth non-interlinking sections (105a, 106a) and a predetermined distance along the transverse direction from the first transverse end (101c),
the second and third parts (103, 104) comprising on the side of the first transverse end (101d) a portion in which the warp yarns are not woven with the weft yarns so as to define third and fourth unidirectional fabric portions (1031, 1041), each unidirectional fabric portion extending over a predetermined distance along the longitudinal direction at least from the bottom (103b, 104b) of the first and second non-interlinking sections (103a, 104a) and a predetermined distance along the transverse direction from the first transverse end (101d),
- the formation, from the fiber blank, of a preform (130) of the blade to be produced, by unfolding on either side of the first part (102) of the blank of segments (103d, 104d, 105d, 106d) of the second to fifth parts (103, 104, 105, 106) not bound to the first part and by shaping the unfolded segments of the second to fifth parts to form parts of preforms of platforms (133a, 134a, 135a, 136a), walls (133d 134d, 135d, 136d) and spoilers (133b, 134b, 135b, 136b, 133c, 134c, 135c, 136c), the shaping of the segments of the second to fifth parts comprising folding down the first to fourth parts of unidirectional fabric onto the first part.

2. The method according to claim 1, wherein the shaping of the unfolded segments (105d, 106d) of the fourth and fifth parts (105, 106) comprises the formation of preform parts of a first platform (135a, 136a), preform parts of an upstream wall (135d, 136d), and preform parts of an upstream spoiler 135b, 136b), and in which the shaping of the unfolded segments (103d, 104d) of the second and third parts (103, 104) comprises the formation of preform parts of a second platform (133a, 134a), preform parts of a downstream wall (133d, 134d), and preform parts of a downstream spoiler (133c, 134c).

3. The method according to claim 2, wherein forming the preform parts of an upstream wall (135d, 136d) and the preform parts of an upstream spoiler (135b, 136b) comprises folding down, along the transverse direction, a first part (1051a, 1061a) of the first and second unidirectional fabric portions (1051, 1061) onto a second part (1051b, 1061b) of said first and second unidirectional fabric portions extending along the longitudinal direction.

4. The method according to claim 2 or 3, wherein forming the preform parts of a downstream wall (133d, 134d) and the preform parts of a downstream spoiler (133c, 134c) comprises folding down, along the transverse direction a first part (1031a, 1041a) of the third and fourth unidirectional fabric portions (1031, 1041) onto the first part.

5. The method for manufacturing a turbomachine blade made of composite material, the method comprising:
- manufacture of a turbomachine blade preform according to any of claims 1 to 4,
- densification of the preform by a matrix to obtain a blade made of composite material having first and second integrated platforms, an integrated upstream and downstream wall and an integrated upstream and downstream spoiler.

6. A blade fiber preform (130) for a turbomachine having a three-dimensional or multilayer weave comprising in one piece first and second platform preform parts (135a, 136a, 133a, 134a), upstream and downstream wall preform parts (135d, 136d, 133d, 134d), upstream and downstream spoiler preform parts (135b, 136b, 133c, 14c), and an airfoil preform part (139), the preform further comprising first and second unidirectional fabric portions (1031, 1041) folded down onto a shank preform part (138), and third and fourth unidirectional fabric portions (1051, 1061) folded down onto the airfoil part.

7. The preform according to claim 6, wherein a part (1031a, 1041a) of the first and second unidirectional fabric portions (1031, 1041) is folded down along the transverse direction onto the airfoil preform part (139) at the upstream wall preform parts and the upstream spoiler preform parts.

8. The preform according to claim 6 or 7, wherein a part (1051a, 1061a) of the third and fourth unidirectional fabric portions (1051, 1061) is folded down along the transverse direction onto a second part (1051b, 1061b) of said first and second unidirectional fabric portions extending along the longitudinal direction at the downstream wall preform parts and downstream spoiler preform parts.

9. The preform according to any of claims 6 to 8, further comprising a root preform part (137).

10. A turbomachine blade of composite material comprising first and second platforms, upstream and downstream walls, upstream and downstream spoilers and an airfoil part, the fibrous reinforcement comprising a blade fiber preform according to any of claims 6 to 8.

11. The turbomachine blade of composite material comprising a root, a shank, first and second platforms, upstream and downstream walls, upstream and downstream spoilers and an airfoil part, the fibrous reinforcement comprising a blade fiber preform according to claim 9.

12. An aircraft engine comprising a plurality of blades according to claim 10 or a plurality of blades according to claim 11.

13. An aircraft comprising at least one engine according to claim 12.
